# EUROPÄISCHE PATENTSCHRIFT

(11) **EP 3 341 149 B1**
(45) Veröffentlichungstag und Bekanntmachung des Hinweises auf die Patenterteilung: **09.10.2019**
(21) Anmeldenummer: 17704180.3
(22) Anmeldetag: 31.01.2017
(51) Int. Cl.: B23C 5/10, B23B 27/16

(54) **SCHNEIDPLATTE, WERKZEUGHALTER UND WERKZEUG**
CUTTING INSERT, TOOL HOLDER AND TOOL
PLAQUETTE DE COUPE, PORTE-OUTIL ET OUTIL

(30) Priorität: 17.03.2016 DE 102016104960
(43) Veröffentlichungstag der Anmeldung: 04.07.2018
(73) Patentinhaber: Hartmetall-Werkzeugfabrik Paul Horn GmbH, 72072 Tübingen (DE)
(72) Erfinder: KEMMLER, Tobias, 72124 Pliezhausen (DE); LUIK, Matthias, 72766 Reutlingen (DE)
(74) Vertreter: Witte, Weller & Partner Patentanwälte mbB
(86) Internationale Anmeldenummer: PCT/EP2017/052037
(87) Internationale Veröffentlichungsnummer: WO 2017/157562

(56) Entgegenhaltungen:
- WO-A1-03/097282
- WO-A1-2016/024819
- DE-A1-102004 023 710
- US-A1- 2012 039 676

## Beschreibung

Die vorliegende Erfindung betrifft eine Schneideplatte gemäß dem Oberbegriff des Anspruchs 1, einen Werkzeughalter gemäß dem Oberbegriff des Anspruchs 10 sowie ein Werkzeug mit einer solchen Schneidplatte und einem solchen Werkzeughalter. Bei dem Werkzeug handelt es sich insbesondere um ein sogenanntes Zirkularfräswerkzeug.

Gemäß dem Oberbegriff des Anspruchs 1 betrifft die vorliegende Erfindung eine Schneidplatte mit einem Grundkörper, welcher eine Schneidplatten-Längsachse definiert, mit zumindest einem vom Umfang des Grundkörpers seitlich auskragenden Schneidkörper, welcher eine Schneide aufweist, und mit einer im Grundkörper vorgesehenen Schneidplatten-Bohrung, welche sich entlang der Schneidplatten-Längsachse erstreckt, wobei auf einer quer zur Schneidplatten-Längsachse verlaufenden Unterseite des Grundkörpers mehrere, in Umfangsrichtung verteilt angeordnete Erhöhungen vorgesehen sind, welche von der Unterseite des Grundkörpers abstehen, so dass sich zwischen jeweils zwei benachbarten Erhöhungen jeweils eine relative Vertiefung ergibt, wobei die Schneidplatte zumindest eine radiale Anlagefläche, mehrere axiale Anlageflächen und mehrere Drehmomentmitnahmeflächen zur Anlage der Schneidplatte an einem Werkzeughalter aufweist, wobei die zumindest eine radiale Anlagefläche auf einem Zylindermantel oder einem Kegelmantel liegt, welcher symmetrisch zur Schneidplatten-Längsachse ist, wobei die axialen Anlageflächen jeweils entweder an einer quer zur Schneidplatten-Längsachse verlaufenden Oberseite der Erhöhungen oder an einer quer zur Schneidplatten-Längsachse verlaufenden Grundfläche der Vertiefungen angeordnet sind, und die Drehmomentmitnahmeflächen jeweils an einer seitlichen Flanke der Erhöhungen angeordnet sind, und wobei die zumindest eine radiale Anlagefläche, die axialen Anlageflächen und die Drehmomentmitnahmeflächen quer zueinander verlaufen.

Gemäß dem Oberbegriff des Anspruchs 10 betrifft die vorliegende Erfindung darüber hinaus einen zugehörigen Werkzeughalter mit einem Schaft, welcher sich im Wesentlichen entlang einer Halter-Längsachse erstreckt und an einem stirnseitigen Ende eine Schnittstelle zur Ankopplung einer Schneidplatte aufweist, und mit einer im Schaft vorgesehenen Halter-Bohrung, welche sich entlang der Halter-Längsachse erstreckt, wobei die Schnittstelle mehrere, in Umfangsrichtung verteilt angeordnete Vertiefungen aufweist, welche durch relative Erhöhungen, die sich jeweils zwischen zwei benachbarten Vertiefungen ergeben, voneinander getrennt sind, wobei der Halter zumindest eine radiale Anlagefläche, mehrere axiale Anlageflächen und mehrere Drehmomentmitnahmeflächen zur Anlage der Schneidplatte an dem Werkzeughalter aufweist, wobei die zumindest eine radiale Anlagefläche auf einem Zylindermantel oder einem Kegelmantel liegt, welcher symmetrisch zur Halter-Längsachse ist, wobei die axialen Anlageflächen jeweils entweder an einer quer zur Halter-Längsachse verlaufenden Grundfläche der Vertiefungen oder an einer quer zur Halter-Längsachse verlaufenden Oberseite der Erhöhungen angeordnet sind, und die Drehmomentmitnahmeflächen jeweils an einer seitlichen Flanke der Vertiefungen angeordnet sind, und wobei die zumindest eine radiale Anlagefläche, die axialen Anlageflächen und die Drehmomentmitnahmeflächen quer zueinander verlaufen.

Eine solche Schneidplatte gemäß dem Oberbegriff des Anspruchs 1 und ein solcher Werkzeughalter gemäß dem Oberbegriff des Anspruchs 10 ist bereits aus der DE 10 2004 023 710 A1 bekannt.

Weitere beispielhafte Fräswerkzeuge mit Werkzeughaltern und lösbar daran angeordneten Schneidplatten sind aus der WO 2016/024819 A1, der WO 03/097282 A1 und der US 2012/039676 A1 bekannt.

Zirkularfräswerkzeuge sind bereits in einer Vielzahl aus dem Stand der Technik bekannt. Sie werden meist in CNC-Bearbeitungszentren zur spanenden Bearbeitung von Metallteilen eingesetzt. Beim Zirkularfräsen, welches auch als Rundfräsen bezeichnet wird, rotiert das Werkzeug um seine Längsachse, wobei das Werkzeug zusätzlich zu dieser Rotation noch translatorisch, beispielsweise auf einer Kreis- oder Schraubenbahn, bewegt wird. Diese Fertigungsart wird oft zur Herstellung von Bohrungen, Zapfen, Bunden, Einstichen oder Hinterschneidungen gewählt.

Viele der bekannten Zirkularfräswerkzeuge weisen eine Schneidplatte aus Hartmetall auf, welche mit Hilfe einer Schraube an einem Werkzeughalter aus Stahl befestigt wird. Die Schneidplatte lässt sich somit bei Verschleiß durch eine neue austauschen, wohingegen der Werkzeughalter mehrfach verwendbar ist.

Aufgrund der sehr hohen Drehmomente, welche bei der Fräsbearbeitung im Werkzeug auftreten, sind besondere Anforderungen an die Schnittstelle zwischen Schneidplatte und Werkzeughalter gesetzt. Der Plattensitz muss extrem stabil ausgestaltet sein und sich zur Übertragung hoher Drehmomente eignen. Hierzu ist es besonders wichtig, dass die Schneidplatte exakt definiert am Werkzeughalter anliegt.

Der vorliegenden Erfindung liegt die Aufgabe zugrunde, eine Schneidplatte, einen Werkzeughalter und ein Werkzeug mit einer solchen Schneidplatte und einem solchen Werkzeughalter bereitzustellen, welche sich insbesondere zum Zirkularfräsen eignen und dabei eine hohe Drehmomentübertragung ermöglichen.

Diese Aufgabe wird gemäß einem ersten Aspekt der vorliegenden Erfindung durch eine Schneidplatte gemäß Anspruch 1 dadurch gelöst, dass die Schneidplatte einen Zapfen aufweist, welcher von der Unterseite des Grundkörpers weiter absteht als die Erhöhungen und symmetrisch zur Schneidplatten-Längsachse ist, und dass die zumindest eine radiale Anlagefläche als ununterbrochene, durchgehende zylindrische oder konische Fläche ausgestaltet ist, welche an einer von der Schneidplatten-Längsachse abgewandten Außenseite des Zapfens angeordnet ist.

Gemäß einem zweiten Aspekt der vorliegenden Erfindung wird die oben genannte Aufgabe durch einen Werkzeughalter gemäß Anspruch 10 dadurch gelöst, dass an der am stirnseitigen Ende des Werkzeughalters angeordneten Schnittstelle ein Zapfen angeordnet ist, welcher von dem stirnseitigen Ende des Werkzeughalters weiter absteht als die Erhöhungen und symmetrisch zur Halter-Längsachse ist, und dass die zumindest eine radiale Anlagefläche als ununterbrochene, durchgehende zylindrische oder konische Fläche ausgestaltet ist, welche an einer von der Halter-Längsachse abgewandten Außenseite des Zapfens angeordnet ist.

Ferner wird die oben genannte Aufgabe durch ein Werkzeug gelöst, mit einer Schneidplatte gemäß Anspruch 1, einem Werkzeughalter und einem Befestigungselement zum Befestigen der Schneidplatte am Werkzeughalter. Des Weiteren wird die oben genannte Aufgabe durch ein Werkzeug gelöst, mit einer Schneidplatte, einem Werkzeughalter gemäß Anspruch 10 und einem Befestigungselement zum Befestigen der Schneidplatte am Werkzeughalter.

Bei dem erfindungsgemäßen Werkzeug ist es insbesondere bevorzugt, dass in montiertem Zustand des Werkzeugs die zumindest eine radiale Anlagefläche der Schneidplatte an der zumindest einen radialen Anlagefläche des Halters anliegt, dass die axialen Anlageflächen der Schneidplatte an den axialen Anlageflächen des Werkzeughalters anliegen, und dass die Drehmomentmitnahmeflächen der Schneidplatte an den Drehmomentmitnahmeflächen des Werkzeughalters anliegen. Besonders bevorzugt berühren sich Schneidplatte und Werkzeughalter nur an den genannten Anlageflächen.

In Bezug auf die vorliegend verwendeten Begriffe sei vorab auf Folgendes hingewiesen: Die Anlageflächen werden ihrer Funktion entsprechend bezeichnet. Die radialen Anlageflächen dienen zur Aufnahme bzw. Übertragung von Kräften in Radialrichtung der Schneidplatte bzw. des Werkzeughalters. Die axialen Anlageflächen dienen zur Aufnahme bzw. Übertragung von Kräften in Axialrichtung bzw. Längsrichtung, also parallel zur Längsachse der Schneidplatte und des Werkzeughalters. Die Drehmomentmitnahmeflächen dienen zur Aufnahme bzw. Übertragung von Kräften in Umfangsrichtung bzw. Rotationsrichtung der Schneidplatte und des Werkzeughalters. Unter dem Begriff "quer" soll vorliegend "nicht parallel" verstanden werden, also ein Winkel ungleich 0°. "Quer" ist vorzugsweise, jedoch nicht notwendigerweise als senkrecht bzw. orthogonal zu verstehen. Unter "im Wesentlichen senkrecht" oder "im Wesentlichen orthogonal" wird vorliegend vorzugsweise "senkrecht" bzw. "orthogonal" verstanden. Die Begriffe "im Wesentlichen senkrecht" bzw. "im Wesentlichen orthogonal" sollen jedoch auch kleinere Abweichungen von einem 90°-Winkel beinhalten, so dass Winkel von 90° ± 3° ebenfalls als "im Wesentlichen senkrecht" bzw. "im Wesentlichen orthogonal" angesehen werden sollen. Die Begriffe "relative Vertiefung" bzw. "relative Erhöhung" werden vorliegend verwendet, um klarzustellen, dass es sich hierbei nicht notwendigerweise um eine tatsächliche Vertiefung bzw. tatsächliche Erhöhung handeln muss. Eine relative Vertiefung ergibt sich automatisch zwischen zwei benachbarten Erhöhungen (relativ dazu betrachtet). Genauso ergibt sich eine Erhöhung automatisch zwischen zwei benachbarten Vertiefungen (ebenfalls relativ dazu betrachtet).

Das erfindungsgemäße Werkzeug zeichnet sich insbesondere durch die klare Aufteilung der Anlageflächen aus, welche an der Schnittstelle zwischen Schneidplatte und Werkzeughalter vorgesehen sind. An der Schneidplatte wie auch an dem Werkzeughalter existiert jeweils eine radiale Anlagefläche, welche zylindrisch oder konisch ist. Zudem existieren an der Schneidplatte und an dem Werkzeughalter jeweils mehrere axiale Anlageflächen, welche quer zur Schneidplatten-Längsachse bzw. quer zur Halter-Längsachse verlaufen. Ferner sind an der Schneidplatte wie auch an dem Werkzeughalter mehrere Drehmomentmitnahmeflächen angeordnet, welche quer zu den axialen Anlageflächen verlaufen. Die Anzahl der axialen Anlageflächen an der Schneidplatte entspricht vorzugsweise der Anzahl an axialen Anlageflächen am Werkzeughalter. Ebenso entspricht auch die Anzahl der an der Schneidplatte angeordneten Drehmomentmitnahmeflächen der Anzahl der an dem Werkzeughalter angeordneten Drehmomentmitnahmeflächen.

Die axialen Anlageflächen sind sowohl an der Schneidplatte als auch am Werkzeughalter in Umfangsrichtung voneinander getrennt und nicht miteinander verbunden. Zwischen zwei benachbarten Anlageflächen ist jeweils eine Erhöhung oder eine Vertiefung angeordnet. Dies gilt sowohl für die axialen Anlageflächen, welche an der Schneidplatte angeordnet sind, als auch für die axialen Anlageflächen, welche an dem Werkzeughalter angeordnet sind. Hierdurch ergibt sich sowohl an der Schneidplatte als auch an dem Werkzeughalter eine Art Segmentierung der axialen Anlage.

Durch die zylindrische oder konische radiale Anlage und die segmentierte axiale Anlage zwischen Schneidplatte und Werkzeughalter ist es möglich, die Drehmomentübertragung so weit wie möglich nach außen zu verlegen. Dies hat den Vorteil, dass sich dadurch sehr hohe Drehmomente ohne Stabilitätsverlust übertragen lassen. Die Drehmomentmitnahmeflächen sind ähnlich wie die axialen Anlageflächen segmentiert und in Umfangsrichtung an der Schneidplatte bzw. an dem Werkzeughalter verteilt. Die Drehmomentmitnahmeflächen werden durch die seitlichen Flanken der Erhöhungen bzw. Vertiefungen, welche an der Schneidplatte bzw. an dem Werkzeughalter angeordnet sind, gebildet. Insgesamt ergibt sich somit ein extrem stabiler und exakt definierter Plattensitz, welcher die Übertragung sehr hoher Drehmomente ermöglicht.

Die oben genannte Aufgabe ist daher vollständig gelöst.

Nachfolgend werden bevorzugte Ausgestaltungen der Schneidplatte beschrieben. Es versteht sich, dass diese Ausgestaltungen auch entsprechend an dem Werkzeughalter vorgesehen sein können.

Ferner ist es bevorzugt, dass eine auf die Schneidplatten-Längsachse zu weisende Innenseite der Erhöhungen an die Schneidplatten-Bohrung entweder direkt angrenzt oder von dieser durch eine Fase oder einen Freistich getrennt ist.

Gemäß Anspruch 1 weist die Schneidplatte einen Zapfen auf, welcher von der Unterseite des Grundkörpers weiter absteht als die Erhöhungen und symmetrisch zur Schneidplatten-Längsachse ist. Die radiale Anlagefläche ist also nicht in der Schneidplatten-Bohrung angeordnet, sondern an einer von der Schneidplatten-Längsachse abgewandten Außenseite des Zapfens. Das Merkmal, dass der Zapfen von der Unterseite des Grundkörpers weiter absteht als die Erhöhungen bedeutet mit anderen Worten, dass die parallel zur Schneidplatten-Längsachse gemessene Höhe des Zapfens größer ist als die Höhe der Erhöhungen. Dadurch kann die an der Außenseite des Zapfens vorgesehene radiale Anlagefläche durchgängig, also vollumfänglich ausgeführt sein. Dies verbessert die Stabilität.

Vorzugsweise sind die Erhöhungen direkt angrenzend an den Zapfen angeordnet. Gemäß einer Ausgestaltung ist es vorgesehen, dass sich die Erhöhungen vom Umfang des Zapfens radial nach außen erstrecken. Gemäß einer alternativen Ausgestaltung ist es vorgesehen, dass sich die Erhöhungen selbst zwar nicht exakt in Radialrichtung nach außen erstrecken, jedoch eine an den Erhöhungen angeordnete Drehmomentmitnahmefläche in Radialrichtung verläuft.

Das Vorsehen der radialen Anlagefläche am Zapfen hat insbesondere den Vorteil, dass sich die radiale Anlagefläche leichter schleifen lässt als die radiale Anlagefläche, welche gemäß der oben genannten Ausgestaltung in der Schneidplatten-Bohrung angeordnet ist.

Unabhängig davon, ob die radiale Anlagefläche in der Schneidplatten-Bohrung oder an einem an der Unterseite der Schneidplatte angeordneten Zapfen vorgesehen ist, handelt es sich bei der radialen Anlagefläche um eine ununterbrochene, durchgehende zylindrische oder konische Fläche.

Zur zylindrischen bzw. konischen Grundform der radialen Anlagefläche sei erwähnt, dass eine zylindrische Anlagefläche einfacher herzustellen ist als eine konische Anlagefläche. Andererseits hat eine konische bzw. kegelförmige Anlagefläche den Vorteil, dass sich hierdurch das radiale Lagerspiel zwischen Schneidplatte und Werkzeughalter noch weiter reduzieren lässt als bei der Zylinderform.

Die axialen Anlageflächen liegen vorzugsweise allesamt in einer gemeinsamen Ebene, welche im Wesentlichen senkrecht, vorzugsweise exakt senkrecht zu der Schneidplatten-Längsachse verläuft. Bei den axialen Anlageflächen handelt es sich vorzugsweise um planare Anlageflächen. Grundsätzlich wären jedoch auch konvexe oder konkave Formen vorstellbar.

Die Drehmomentmitnahmeflächen verlaufen im Wesentlichen senkrecht, vorzugsweise exakt senkrecht zu den axialen Anlageflächen und im Wesentlichen parallel, vorzugsweise exakt parallel zu der Schneidplatten-Längsachse. Die Drehmomentmitnahmeflächen können jedoch auch etwas geneigt sein gegenüber der Schneidplatten-Längsachse. Die axialen Anlageflächen sind vorzugsweise über einen Radius und/oder eine Fase mit den Drehmomentmitnahmeflächen verbunden.

Gemäß einer weiteren Ausgestaltung sind die Drehmomentmitnahmeflächen als sinterrohe Flächen ausgeführt und die zumindest eine radiale Anlagefläche und die axialen Anlageflächen als geschliffene Flächen. Unter einer "sinterrohen Fläche" wird vorliegend eine Fläche verstanden, welche an einem gesinterten Bauteil nach dem Sintervorgang entsteht und nicht weiter bearbeitet wird bzw. extra nachgeschliffen wird.

Gemäß einer weiteren Ausgestaltung weisen die Erhöhungen eine erste und eine zweite Erhöhung auf, wobei die erste Erhöhung eine andere Form und/oder Größe hat als die zweite Erhöhung. Vorzugsweise sind an der Schneidplatte mehrere erste Erhöhungen und eine einzige zweite Erhöhung angeordnet. Auf diese Weise wird gewährleistet, dass sich die Schneidplatte nur in einer einzigen Orientierung am Werkzeughalter festlegen lässt. Dies ist insbesondere deshalb von Vorteil, da hierdurch sichergestellt wird, dass die Kühlmittelbohrungen, welche meist am Werkzeughalter vorgesehen sind, relativ zu dem an der Schneidplatte vorgesehenen mindestens einen Schneidkörper exakt ausgerichtet sind. Weiterhin ist diese Ausgestaltung auch in Bezug auf die Präzision von Vorteil, da die Schneiden immer in der gleichen Ausrichtung hergestellt (geschliffen) und eingesetzt werden.

Vorzugsweise weist die Schneidplatte insgesamt drei, sechs oder neun der genannten Erhöhungen auf.

Die oben genannten Ausgestaltungen können, wie bereits erwähnt, entsprechend auch an dem Werkzeughalter vorgesehen sein.

Gemäß einer Ausgestaltung ist die an dem Werkzeughalter vorgesehene radiale Anlagefläche in der Halter-Bohrung angeordnet.

Gemäß Anspruch 10 ist an der am stirnseitigen Ende des Werkzeughalters angeordneten Schnittstelle ein Zapfen angeordnet, welcher von dem stirnseitigen Ende des Werkzeughalters absteht und symmetrisch zur Halter-Längsachse ist, wobei die zumindest eine radiale Anlagefläche des Werkzeughalters an einer von der Halter-Längsachse abgewandten Außenseite des Zapfens angeordnet ist. Die an der Schnittstelle des Werkzeughalters vorgesehenen Vertiefungen erstrecken sich in dieser Ausgestaltung vom Umfang des Zapfens vorzugsweise radial nach außen.

Gemäß einer weiteren Ausgestaltung liegen die axialen Anlageflächen des Werkzeughalters in einer gemeinsamen Ebene, welche im Wesentlichen senkrecht, vorzugsweise exakt senkrecht zu der Halter-Längsachse verläuft.

Die Drehmomentmitnahmeflächen des Werkzeughalters verlaufen, ähnlich wie bei der Schneidplatte, vorzugsweise im Wesentlichen senkrecht zu den axialen Anlageflächen und im Wesentlichen parallel zu der Halter-Längsachse.

Entsprechend der oben für die Schneidplatte genannten Ausgestaltung weisen in einer Ausgestaltung des Werkzeughalters die Vertiefungen eine erste Vertiefung und eine zweite Vertiefung auf, wobei die erste Vertiefung eine andere Form und/oder Größe hat als die zweite Vertiefung.

An dem Werkzeughalter sind vorzugsweise insgesamt drei, sechs oder neun der genannten Vertiefungen vorgesehen.

Ausführungsbeispiele des erfindungsgemäßen Werkzeugs sind in den nachfolgenden Zeichnungen dargestellt und werden in der nachfolgenden Beschreibung näher erläutert.
Es zeigen:
- Fig. 1: eine perspektivische Ansicht eines ersten Ausführungsbeispiels des erfindungsgemäßen Werkzeugs;
- Fig. 2: eine Explosionsdarstellung des in Fig. 1 gezeigten Ausführungsbeispiels des erfindungsgemäßen Werkzeugs;
- Fig. 3: eine perspektivische Ansicht einer erfindungsgemäßen Schneidplatte gemäß einer ersten Ausführungsform;
- Fig. 4: ein Detail der in Fig. 3 gezeigten Schneidplatte;
- Fig. 5: eine perspektivische Ansicht eines erfindungsgemäßen Werkzeughalters gemäß einer ersten Ausführungsform;
- Fig. 6: ein Detail des in Fig. 5 gezeigten Werkzeughalters;
- Fig. 7: eine perspektivische Ansicht der erfindungsgemäßen Schneidplatte gemäß einer zweiten Ausführungsform;
- Fig. 8: ein Detail der in Fig. 7 gezeigten Schneidplatte;
- Fig. 9: eine perspektivische Ansicht des erfindungsgemäßen Werkzeughalters gemäß einer zweiten Ausführungsform;
- Fig. 10: ein Detail des in Fig. 9 gezeigten Werkzeughalters;
- Fig. 11: eine perspektivische Ansicht der erfindungsgemäßen Schneidplatte gemäß einer dritten Ausführungsform;
- Fig. 12: ein Detail der in Fig. 11 gezeigten Schneidplatte;
- Fig. 13: eine perspektivische Ansicht des erfindungsgemäßen Werkzeughalters gemäß einer dritten Ausführungsform;
- Fig. 14: ein Detail des in Fig. 13 gezeigten Werkzeughalters;
- Fig. 15: eine perspektivische Ansicht der erfindungsgemäßen Schneidplatte gemäß einer vierten Ausführungsform;
- Fig. 16: ein Detail der in Fig. 15 gezeigten Schneidplatte;
- Fig. 17: eine perspektivische Ansicht des erfindungsgemäßen Werkzeughalters gemäß einer vierten Ausführungsform;
- Fig. 18: ein Detail des in Fig. 17 gezeigten Werkzeughalters.
- Fig. 19: eine perspektivische Ansicht der erfindungsgemäßen Schneidplatte gemäß einer fünften Ausführungsform;
- Fig. 20: ein Detail der in Fig. 19 gezeigten Schneidplatte;
- Fig. 21: eine perspektivische Ansicht des erfindungsgemäßen Werkzeughalters gemäß einer fünften Ausführungsform; und
- Fig. 22: ein Detail des in Fig. 21 gezeigten Werkzeughalters.

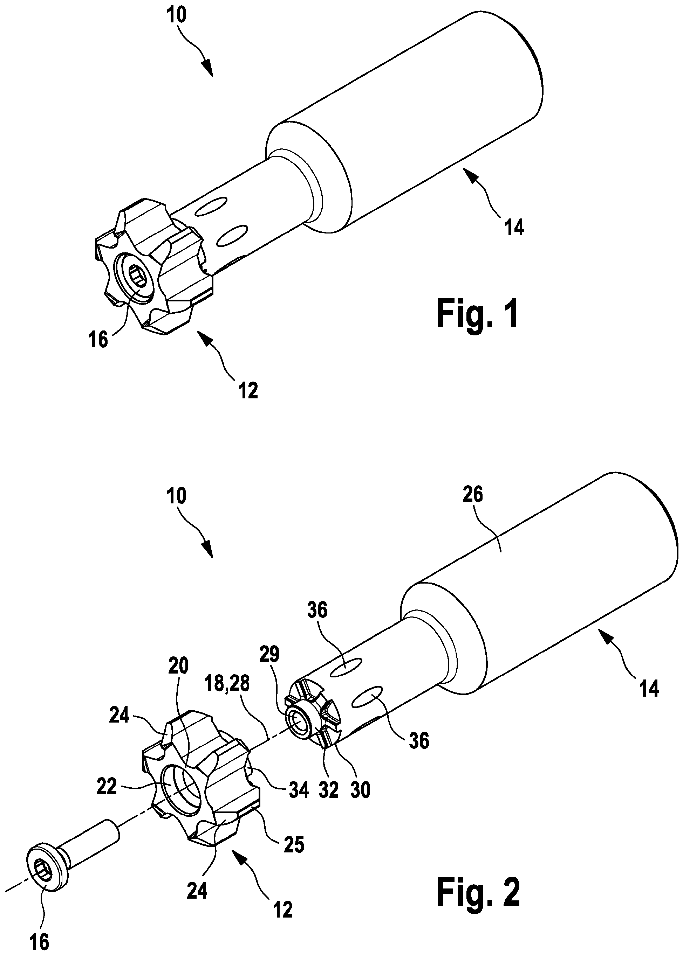

Die Fig. 1 und 2 zeigen den grundsätzlichen Aufbau des erfindungsgemäßen Werkzeugs. Das Werkzeug ist darin in seiner Gesamtheit mit der Bezugsziffer 10 bezeichnet.

Das Werkzeug 10 weist eine Schneidplatte 12 und einen Werkzeughalter 14 auf. Die Schneidplatte 12 ist vorzugsweise aus Hartmetall. Der Werkzeughalter 14 ist vorzugsweise aus Stahl.

Die Schneidplatte 12 ist mit Hilfe eines Befestigungselements 16 am Werkzeughalter 14 befestigt. Bei dem Befestigungselement 16 handelt es sich vorzugsweise um eine Spannschraube, welche in ein entsprechendes Gewinde eingreift, welches im Werkzeughalter 14 vorgesehen ist.

Die Schneidplatte 12 ist vorzugsweise, jedoch nicht zwingend notwendigerweise symmetrisch zu einer Schneidplatten-Längsachse 18. Sie hat einen Grundkörper 20, welcher sich um die Schneidplatten-Längsachse 18 herum erstreckt. Der Grundkörper 20 weist eine Schneidplatten-Bohrung 22 auf. Die Schneidplatten-Bohrung 22 durchdringt den Grundkörper 20 und erstreckt sich entlang der Schneidplatten-Längsachse 18. Die Schneidplatten-Bohrung 22 ist also als Durchgangsbohrung ausgestaltet.

Des Weiteren weist die Schneidplatte 12 mehrere Schneidkörper 24 auf, welche vom Umfang des Grundkörpers 20 seitlich auskragen. Die Schneidkörper 24 kragen vom Grundkörper 20 im Wesentlichen in Radialrichtung nach außen aus. Es versteht sich jedoch, dass die Schneidkörper 24 nicht exakt in Radialrichtung vom Grundkörper 20 abstehen müssen. Sie können gegenüber der Radialrichtung auch leicht gekrümmt oder geneigt sein. An jedem Schneidkörper 24 ist zumindest eine Schneide 25 vorgesehen. In den in den Zeichnungen gezeigten Ausführungsformen weist die Schneidplatte 12 insgesamt sechs Schneidkörper 24 auf, welche von dem Grundkörper 20 seitlich abstehen. Die Schneidplatte 12 kann jedoch auch nur einen, zwei, drei, vier, fünf oder auch mehr als sechs Schneidkörper 24 aufweisen, welche seitlich von dem Grundkörper 20 abstehen. Bevorzugt weist die Schneidplatte 12 drei, sechs oder neun Schneidkörper 24 auf.

Der Werkzeughalter 14 besitzt einen Schaft 26, welcher zumindest abschnittsweise zylindrisch ausgeführt ist. Dieser Schaft 26 erstreckt sich entlang einer Halter-Längsachse 28. Die Halter-Längsachse 28 fällt in montiertem Zustand des Werkzeugs 10 mit der Schneidplatten-Längsachse 18 zusammen. Entlang der Halter-Längsachse 28 erstreckt sich innerhalb des Schafts 26 eine Halter-Bohrung 29. Diese ist vorzugsweise als Sacklochbohrung ausgeführt, kann jedoch auch als Durchgangsbohrung durch den gesamten Werkzeughalter 14 ausgeführt sein.

An einem stirnseitigen Ende 30 des Schafts 26 weist der Werkzeughalter 14 eine Schnittstelle 32 zur Ankopplung der Schneidplatte 12 auf. Diese Schnittstelle 32 lässt sich mit einer entsprechenden Schnittstelle 34, welche an der Schneidplatte 12 angeordnet ist, koppeln.

Der Schaft 26 des Werkzeughalters 14 weist des Weiteren mehrere interne Kühlmittelbohrungen auf (nicht explizit gezeigt), mittels deren sich Kühlmittel innerhalb des Werkzeughalters 14 hin zu der Schneidplatte 12 leiten lässt. Diese Kühlmittelkanäle enden in Kühlmittelaustritten 36, welche im Bereich des stirnseitigen Endes 30 in Umfangsrichtung am Schaft 26 verteilt angeordnet sind.

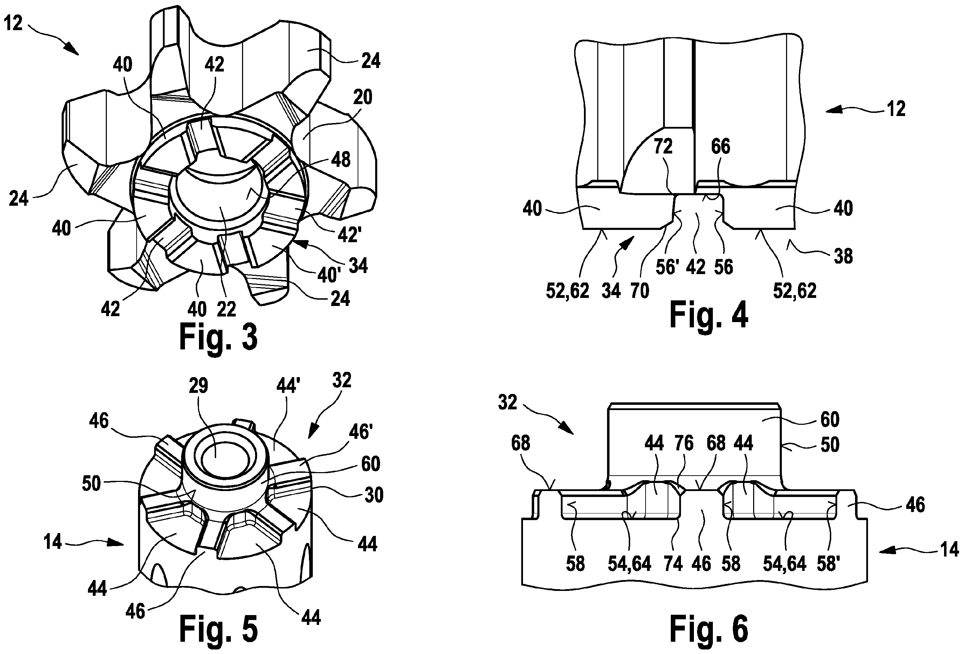

Wesentliche Merkmale der Erfindung ergeben sich durch den Aufbau der Schnittstelle 34, welche an der Schneidplatte 12 angeordnet ist, sowie durch den Aufbau der Schnittstelle 32, welche an dem Werkzeughalter 14 angeordnet ist. Die Schnittstellen 32, 34 sind zwei, einander entsprechende Gegenstücke. Die Fig. 3-18 zeigen vier verschiedene Ausführungsformen der Schnittstellen 32, 34.

Die Fig. 3-6 zeigen eine erste Ausführungsform der Schneidplatte 12 und des Werkzeughalters 14 bzw. der Schnittstelle 34 und der Schnittstelle 32. Fig. 3 und 4 zeigen die Schneidplatte 12 in einer perspektivischen Ansicht von schräg unten sowie in einer Detailansicht im Bereich der Schnittstelle 34. Fig. 5 und 6 zeigen den Werkzeughalter 14 im Bereich der Schnittstelle 32 in einer perspektivischen Ansicht sowie in einer Seitenansicht.

Die Schnittstelle 34 ist auf einer Unterseite des Grundkörpers 20 der Schneidplatte 12 angeordnet. Die Schnittstelle 32 ist im Bereich des stirnseitigen Endes 30 des Werkzeughalters 14 angeordnet.

Die Schnittstelle 34 weist mehrere Erhöhungen 40 auf, welche von der Unterseite 38 des Grundkörpers 20 parallel zur Längsachse 18 nach unten hin abstehen. Diese Erhöhungen bzw. Erhöhungsbereiche 40 sind in Umfangsrichtung gleichmäßig verteilt an der Schneidplatte 12 angeordnet. Zwischen diesen Erhöhungen 40 ergeben sich Vertiefungen 42, welche vorliegend als relative Vertiefungen bezeichnet werden, da diese nicht notwendigerweise als Materialaussparungen, welche in den Grundkörper 20 der Schneidplatte 12 hinein vertieft sind, realisiert sein müssen, sondern lediglich relativ zu den benachbarten Erhöhungen 40 vertieft sein müssen. Die Vertiefungen 42 sind somit ebenfalls in Umfangsrichtung an der Schneidplatte 12 verteilt angeordnet. Die Anzahl der Vertiefungen 42 entspricht der Anzahl der Erhöhungen 40. Im vorliegenden Beispiel existieren jeweils sechs Erhöhungen 40 und sechs Vertiefungen 42. Die Anzahl der Erhöhungen 40 und Vertiefungen 42 entspricht vorzugsweise der Anzahl an Schneidkörpern 24, welche seitlich vom Grundkörper 20 auskragen.

Den an der Schneidplatte 12 vorgesehenen Erhöhungen 40 und Vertiefungen 42 entsprechend weist die am Werkzeughalter 14 vorgesehene Schnittstelle 32 ebenfalls Vertiefungen 44 und Erhöhungen 46 auf. Es versteht sich, dass die Anzahl der am Werkzeughalter vorgesehenen Vertiefungen 44 zwingend notwendigerweise der Anzahl der Erhöhungen 40 entspricht, welche an der Schneidplatte 12 vorgesehen sind. Ebenso entspricht die Anzahl der am Werkzeughalter 14 vorgesehenen Erhöhungen 46 der Anzahl der an der Schneidplatte 12 vorgesehenen Vertiefungen 42.

Zur Übertragung der während des Einsatzes des Werkzeugs 10 wirkenden Kräfte zwischen Werkzeughalter 14 und Schneidplatte 12 weisen die Schnittstellen 32, 34 mehrere Anlageflächen auf, mit denen die Schneidplatte 12 am Werkzeughalter 14 anliegt. Die Schnittstelle 32 wie auch die Schnittstelle 34 weisen jeweils drei verschiedene Arten von Anlageflächen auf. Jeweils eine radiale Anlagefläche 48, 50 dient der Übertragung von Kräften in Radialrichtung der Schneidplatte 12 bzw. des Werkzeughalters 14. Mehrere axiale Anlageflächen 52, 54 dienen der Kraftübertragung in Axialrichtung, also parallel zur Schneidplatten-Längsachse 18 bzw. Halter-Längsachse 28. Mehrere Drehmomentmitnahmeflächen 56, 58 dienen der Kraft- bzw. Momentübertragung in Umfangsrichtung der Schneidplatte 12 bzw. des Werkzeughalters 14.

Bei der in den Fig. 3 und 4 dargestellten ersten Ausführungsform der Schneidplatte 12 ist die radiale Anlagefläche 48 der Schnittstelle 34 in der Schneidplatten-Bohrung 22 angeordnet. Dieser an der Schneidplatte 12 vorgesehenen radialen Anlagefläche 48 entsprechend weist die Schnittstelle 32 des Werkzeughalters 14 eine radiale Anlagefläche 50 auf. Diese radiale Anlagefläche 50 ist gemäß der in den Fig. 5 und 6 gezeigten ersten Ausführungsform des Werkzeughalters 14 an einem Zapfen 60 angeordnet, welcher von dem stirnseitigen Ende 30 des Werkzeughalters 14 absteht. Der Zapfen 60 und die radiale Anlagefläche 50 sind vorzugsweise parallel und symmetrisch zur Halter-Längsachse 28 ausgerichtet. Gemäß der ersten Ausführungsform handelt es sich bei den radialen Anlageflächen 48, 50 jeweils um zylindrische Flächen.

Die axialen Anlageflächen der Schnittstelle 34 der Schneidplatte 12 sind vorzugsweise auf den quer zur Schneidplatten-Längsachse 18 verlaufenden Oberseiten 62 der Erhöhungen 40 angeordnet (siehe Fig. 4). Die axialen Anlageflächen 54 der Schnittstelle 32 des Werkzeughalters 14 sind dementsprechend auf den quer zur Halter-Längsachse 28 ausgerichteten Grundflächen 64 der Vertiefungen 44 angeordnet bzw. werden durch diese gebildet. Die axialen Anlageflächen 52, 54 sind vorzugsweise jeweils als planare Flächen ausgestaltet. Die axialen Anlageflächen 52 sind vorzugsweise orthogonal zur Schneidplatten-Längsachse 18 ausgerichtet. Die axialen Anlageflächen 54 sind vorzugsweise orthogonal zur Halter-Längsachse 28 ausgerichtet.

Grundsätzlich wäre es auch möglich, die Grundflächen 66 der Vertiefungen 42 der Schnittstelle 34 und die entsprechend auf der Oberseite 68 der Erhöhungen 46 der Schnittstelle 32 vorgesehenen Flächen anstelle der Flächen 52, 54 als axiale Anlageflächen zu verwenden.

Die Drehmomentmitnahmeflächen 56 der Schnittstelle 34 der Schneidplatte 12 sind an den seitlichen Flanken der Erhöhungen 40 angeordnet. Die entsprechenden Drehmomentmitnahmeflächen 58 der Schnittstelle 32 des Werkzeughalters 14 sind an den seitlichen Flanken der Vertiefungen 44 angeordnet. Die Drehmomentmitnahmeflächen 56, 58 sind vorzugsweise orthogonal zu den axialen Anlageflächen 52, 54 ausgerichtet. Die Drehmomentmitnahmeflächen 56, 58 erstrecken sich vorzugsweise parallel zur Schneidplatten-Längsachse 18 bzw. parallel zur Halter-Längsachse 28. Sie können jedoch auch unter einem Winkel zur Längsachse 18 bzw. 28 geneigt sein.

Gegenüber der Drehmomentmitnahmeflächen 56 existieren an der benachbarten Erhöhung 40 jeweils eine weitere Drehmomentmitnahmefläche 56' (siehe Fig. 4). Ebenso weist jede Vertiefung 44 der Schnittstelle 32 nicht nur eine Flanke auf, an der die Drehmomentmitnahmeflächen 58 angeordnet sind, sondern eine gegenüberliegende Flanke, an welcher eine weitere Drehmomentmitnahmefläche 58' angeordnet ist (siehe Fig. 6). Diese Drehmomentmitnahmeflächen 56', 58' können je nach Rotationsrichtung des Werkzeugs 10 ebenfalls verwendet werden und sind vorzugsweise entsprechend zu den Drehmomentmitnahmeflächen 56, 58 aufgebaut bzw. ausgerichtet. Der Abstand zwischen zwei gegenüberliegenden Drehmomentmitnahmeflächen 56, 56' einer Vertiefung 42 der Schnittstelle 34 ist vorzugsweise größer als der Abstand zweier benachbarter Drehmomentmitnahmeflächen 58, 58', welche die Flanken einer Erhöhung 46 der Schnittstelle 32 bilden. Die Erhöhungen 46 der Schnittstelle 32 sind also vorzugsweise schmäler ausgestaltet als die Vertiefungen 42 der Schnittstelle 34. Somit entsteht entgegen der Rotationsrichtung des Werkzeugs 10 zwischen Schneidplatte 12 und Halter 14 etwas Spiel.

Weiterhin ist es bevorzugt, dass eine Vertiefung 42' der Schnittstelle 34 eine andere Form und/oder Größe hat als die übrigen Vertiefungen 42. Entsprechend ist es bevorzugt, dass eine Erhöhung 46' der Schnittstelle 32 eine andere Form und/oder Größe hat als die übrigen Erhöhungen 46. Dies dient dazu, dass sich die Schneidplatte 12 nur in einer einzigen Position am Werkzeughalter 14 festlegen lässt. Dadurch ist insbesondere eine korrekte Ausrichtung der Kühlmittelaustritte 36 in Bezug zu den Schneidkörpern 24 der Schneidplatte 12 gewährleistet. Anstelle unterschiedlicher Arten von Vertiefungen 42, 42' kann die Schnittstelle 34 auch unterschiedlich große Erhöhungen 40, 40' aufweisen, wobei an der Schnittstelle 32 ebenfalls unterschiedlich große Vertiefungen 44, 44' vorgesehen sind. Dies kann auch kumulativ mit den unterschiedlich großen Vertiefungen 42, 42' und den unterschiedlich großen Erhöhungen 46, 46' vorliegen.

Die axialen Anlageflächen 52 der Schnittstelle 34 der Schneidplatte 12 grenzen vorzugsweise nicht unmittelbar an die Drehmomentmitnahmeflächen 56 an, sondern sind von diesen durch eine Fase 70 getrennt (siehe Fig. 4). Ebenso existiert vorzugsweise auch ein Radius 72 zwischen den Drehmomentmitnahmeflächen 56 und den Grundflächen 66 der Vertiefungen 42 (siehe Fig. 4). Ähnliches gilt für die Schnittstelle 32 des Werkzeughalters 14. Zwischen den axialen Anlageflächen 54 und den Drehmomentmitnahmeflächen 58 ist hier ebenfalls eine Fase und/oder ein Radius 74 vorgesehen (siehe Fig. 6). Auch zwischen den Drehmomentmitnahmeflächen 58 und der Oberseite 68 der Erhöhungen 46 ist vorzugsweise eine Fase und/oder ein Radius 76 angeordnet (siehe Fig. 6).

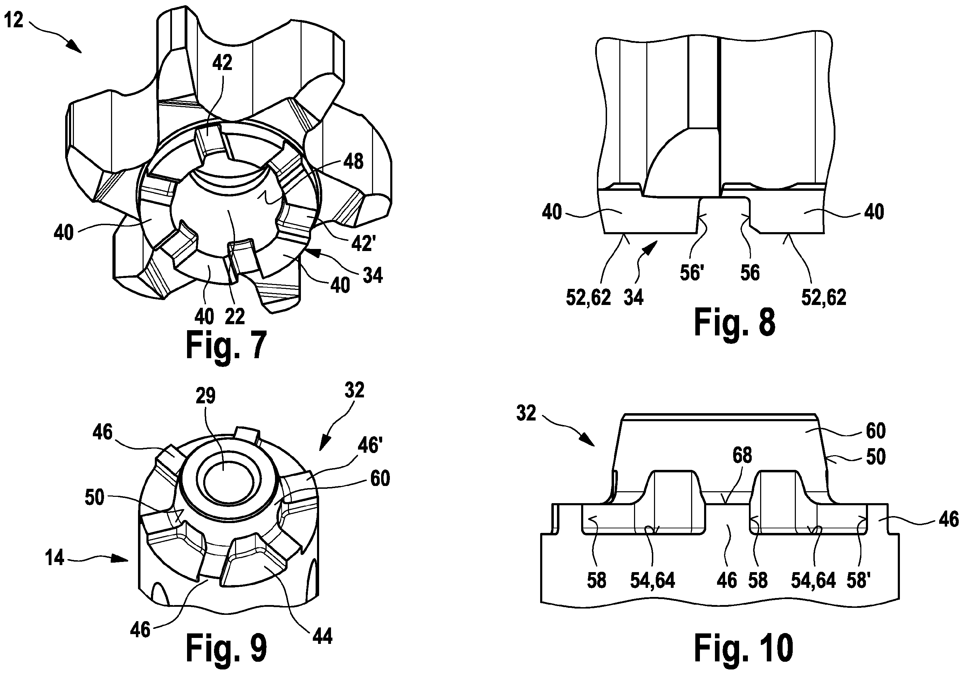

Weitere Ausführungsbeispiele der Schneidplatte 12 und des Werkzeughalters 14 sind in den Fig. 7-18 dargestellt. Das Grundkonzept der klaren Aufteilung in radiale Anlageflächen, axiale Anlageflächen und Drehmomentmitnahmeflächen bleibt auch in diesen Ausführungsbeispielen beibehalten. Ebenso bleibt auch die Idee einer segmentierten axialen Anlagefläche, wobei die einzelnen Segmente der axialen Anlagefläche durch Erhöhungen oder Vertiefungen voneinander getrennt sind, beibehalten. Weiterhin ist es auch in den Ausführungsbeispielen der Fig. 7-18 bevorzugt, dass die axialen Anlageflächen orthogonal zu den Drehmomentmitnahmeflächen verlaufen. Es wird daher nachfolgend nur auf die Unterschiede der einzelnen Ausführungsbeispiele näher eingegangen.

Die Fig. 7-10 zeigen ein zweites Ausführungsbeispiel der Schneidplatte 12 (siehe Fig. 7 und 8) und des Werkzeughalters 14 (siehe Fig. 9 und 10). Der wesentliche Unterschied zu der in den Fig. 3-6 gezeigten ersten Ausführungsform besteht darin, dass die radiale Anlagefläche 48 der Schnittstelle 34 der Schneidplatte 12 nicht als zylindrische Fläche, sondern als konische Fläche ausgestaltet ist. Dementsprechend ist auch die radiale Anlagefläche 50 der Schnittstelle 32 des Werkzeughalters 14 nicht als zylindrische Fläche ausgestaltet, sondern als konische Fläche. Diese konischen, radialen Anlageflächen 48, 50 sind im Vergleich zu den zylindrischen, radialen Anlageflächen des ersten Ausführungsbeispiels etwas schwerer zu fertigen. Sie reduzieren jedoch das radiale Lagerspiel, weshalb sie aus konstruktiver Sicht von Vorteil sind.

Ein weiterer Unterschied zwischen den ersten beiden Ausführungsformen besteht darin, dass die Fasen/Radien 70, 76, welche oben im Zuge der ersten Ausführungsform beschrieben wurden, bei der zweiten Ausführungsform nicht oder nur teilweise vorhanden sind.

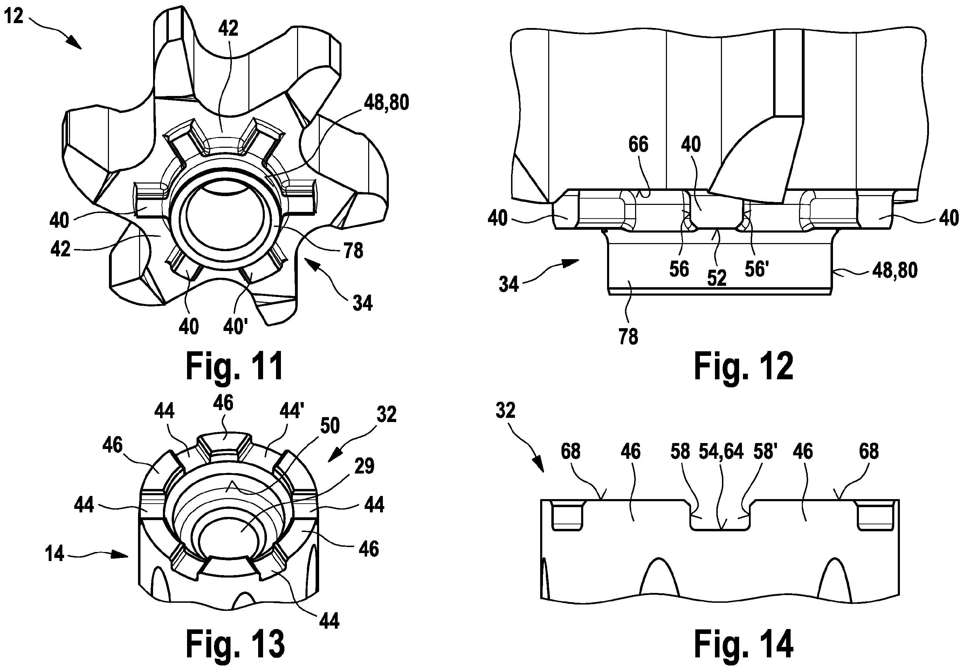

Die Fig. 11-14 zeigen eine dritte Ausführungsform der Schneidplatte 12 (Fig. 11 und 12) und des Werkzeughalters 14 (Fig. 13 und 14). Der wesentliche Unterschied zu den ersten beiden Ausführungsformen besteht darin, dass das Profil der Erhöhungen 40, 46 und Vertiefungen 42, 44 der Schnittstellen 34, 32 umgekehrt bzw. ausgetauscht ist. Die Erhöhungen 40 sind im Vergleich zu den ersten beiden Ausführungsformen in Umfangsrichtung schmaler ausgestaltet. Dementsprechend sind die Vertiefungen 42 in Umfangsrichtung breiter ausgestaltet. Umgekehrtes gilt für die Erhöhungen 44 und Vertiefungen 46, welche am Werkzeughalter 14 vorgesehen sind. Die Erhöhungen 46 sind im Vergleich zu den ersten beiden Ausführungsformen in Umfangsrichtung breiter ausgestaltet. Die Vertiefungen 44 sind in Umfangsrichtung vergleichsweise schmaler ausgestaltet. Noch wesentlicher ist jedoch der Unterschied, dass die Schnittstelle 32 des Werkzeughalters 14 nunmehr keinen Zapfen 60 mehr aufweist. Stattdessen weist die Schnittstelle 34 der Schneidplatte 12 einen Zapfen 78 auf, welcher von der Unterseite des Grundkörpers 20 der Schneidplatte 12 nach unten hin absteht. Die radiale Anlagefläche 48 ist auf der von der Schneidplatten-Längsachse abgewandten Außenseite 80 des Zapfens 78 angeordnet. Ähnlich wie bei der ersten Ausführungsform hat die radiale Anlagefläche 48 gemäß der dritten Ausführungsform eine zylindrische Form. Die radiale Anlagefläche 50 der Schnittstelle 32 des Werkzeughalters 14 ist in der Halter-Bohrung 29 angeordnet (siehe Fig. 13). Sie hat ebenfalls eine zylindrische Form. Die Anordnung der axialen Anlageflächen 52, 54 und der Drehmomentmitnahmeflächen 56, 58 unterscheidet sich abgesehen von den unterschiedlichen Größen und/oder Formen der Erhöhungen 40, 46 und der Vertiefungen 42, 44 im Vergleich zu den ersten beiden Ausführungsformen nicht. Auch bei der dritten Ausführungsform ist es grundsätzlich möglich, anstelle der axialen Anlagefläche 52 auf der Oberseite der Erhöhungen 40 die Grundfläche 66 der Vertiefungen 42 als axiale Anlageflächen zu verwenden. Dementsprechend wäre es ebenso möglich, die Oberseiten 68 der Erhöhungen 46 anstelle der Grundflächen 64 der Vertiefungen 44 als axiale Anlageflächen zu verwenden. Je nach Drehrichtung erfolgt auch bei der dritten Ausführungsform die Drehmomentmitnahme entweder über die Drehmomentmitnahmeflächen 56 und 58 oder über die Drehmomentmitnahmeflächen 56' und 58'.

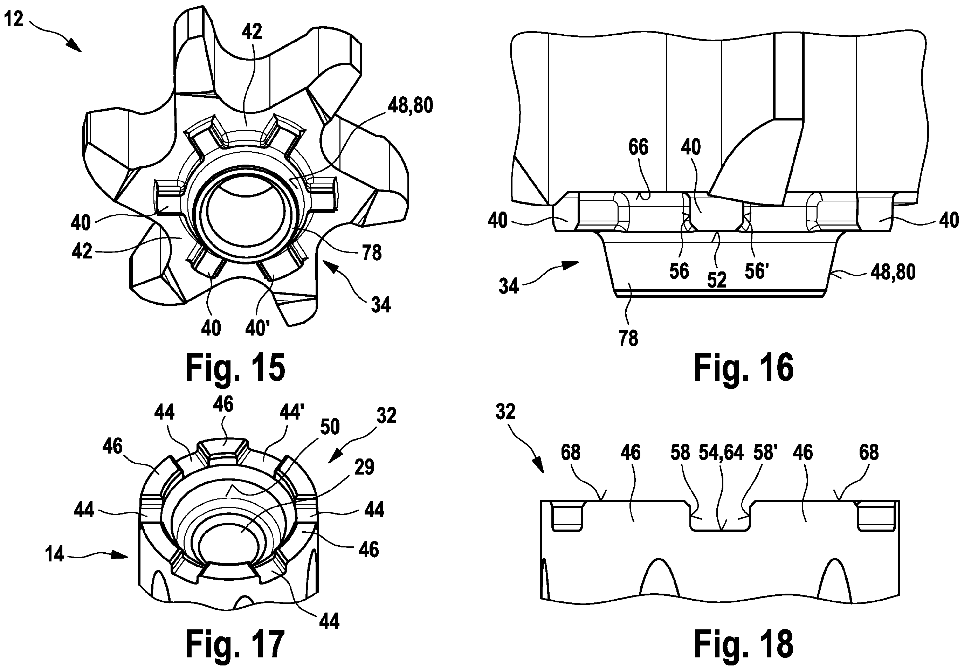

Die Fig. 15-18 zeigen eine vierte Ausführungsform der Schneidplatte 12 (Fig. 15 und 16) und des Werkzeughalters 14 (Fig. 17 und 18). Diese vierte Ausführungsform ist der dritten Ausführungsform, welche in den Fig. 11-14 dargestellt ist, sehr ähnlich. Der wesentliche Unterschied zwischen diesen beiden Ausführungsformen besteht darin, dass die an der Außenseite 80 des Zapfens 78 angeordnete radiale Anlagefläche 48 der Schnittstelle 34 konisch statt zylindrisch geformt ist (siehe Fig. 16). Dementsprechend ist auch die in der Halter-Bohrung 29 vorgesehene radiale Anlagefläche 50 der Schnittstelle 32 konisch geformt. Der übrige Aufbau unterscheidet sich ansonsten nicht oder zumindest nicht wesentlich von der dritten Ausführungsform. Die Erhöhungen 40 der Schnittstelle 34 erstrecken sich auch hier von dem Zapfen 78 ausgehend radial nach außen.

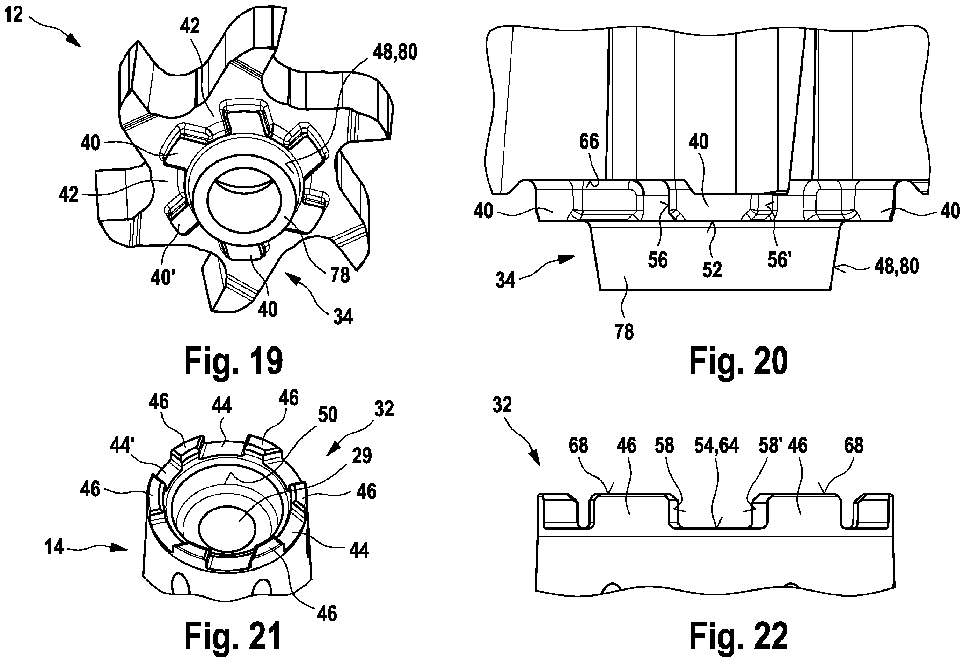

Die Fig. 19-22 zeigen eine fünfte Ausführungsform der Schneidplatte 12 (Fig. 19 und 20) und des Werkzeughalters 14 (Fig. 21 und 22). Diese fünfte Ausführungsform ist der vierten Ausführungsform, welche in den Fig. 15-18 dargestellt ist, sehr ähnlich. Der wesentliche Unterschied zwischen diesen beiden Ausführungsformen besteht darin, dass die an der Unterseite 38 des Schneidplatten-Grundkörpers 20 angeordneten Erhöhungen etwas anders geformt sind. Bei der in den Fig. 15-18 gezeigten vierten Ausführungsform verläuft jeweils die Mittelachse der Erhöhungen 40 in Radialrichtung. Dies ist bei der in den Fig. 19-22 gezeigten fünften Ausführungsform nicht der Fall. Stattdessen verlaufen die an den Erhöhungen 40 angeordneten Drehmomentmitnahmeflächen 56 in Radialrichtung. Entsprechende gilt für die am Halter 14 vorgesehenen Drehmomentmitnahmeflächen 58. Dies sorgt für eine verbesserte Kraftübertragung zwischen Halter 14 und Schneidplatte 12. Zudem werden die den Drehmomentmitnahmeflächen 56, 58 gegenüberliegenden Seitenflächen 56', 58' dadurch entlastet.

Abschließend sei erwähnt, dass die Anzahl der Erhöhungen 40 nicht zwingend notwendigerweise der Anzahl der Schneidkörper 24 entsprechen muss. Es ist auch möglich, dass die Anzahl der Erhöhungen 40 größer oder kleiner ist als die Anzahl der Schneidkörper 24.

## Patentansprüche

1. Schneidplatte (12) für ein Werkzeug (10) zur spanenden Bearbeitung eines Werkstücks, mit einem Grundkörper (20), welcher eine Schneidplatten-Längsachse (18) definiert, mit zumindest einem vom Umfang des Grundkörpers (20) seitlich auskragenden Schneidkörper (24), welcher eine Schneide (25) aufweist, und mit einer im Grundkörper (20) vorgesehenen Schneidplatten-Bohrung (22), welche sich entlang der Schneidplatten-Längsachse (18) erstreckt, wobei auf einer quer zur Schneidplatten-Längsachse (18) verlaufenden Unterseite (38) des Grundkörpers (20) mehrere, in Umfangsrichtung verteilt angeordnete Erhöhungen (40) vorgesehen sind, welche von der Unterseite (38) des Grundkörpers (20) abstehen, so dass sich zwischen jeweils zwei benachbarten Erhöhungen (40) jeweils eine relative Vertiefung (42) ergibt, wobei die Schneidplatte (12) zumindest eine radiale Anlagefläche (48), mehrere axiale Anlageflächen (52, 66) und mehrere Drehmomentmitnahmeflächen (56, 56') zur Anlage der Schneidplatte (12) an einem Werkzeughalter (14) aufweist, wobei die zumindest eine radiale Anlagefläche (48) auf einem Zylindermantel oder einem Kegelmantel liegt, welcher symmetrisch zur Schneidplatten-Längsachse (18) ist, wobei die axialen Anlageflächen (52, 66) jeweils entweder an einer quer zur Schneidplatten-Längsachse (18) verlaufenden Oberseite (62) der Erhöhungen (40) oder an einer quer zur Schneidplatten-Längsachse (18) verlaufenden Grundfläche (66) der Vertiefungen (42) angeordnet sind, und die Drehmomentmitnahmeflächen (56, 56') jeweils an einer seitlichen Flanke der Erhöhungen (40) angeordnet sind, und wobei die zumindest eine radiale Anlagefläche (48), die axialen Anlageflächen (52, 66) und die Drehmomentmitnahmeflächen (56, 56') quer zueinander verlaufen,
**dadurch gekennzeichnet, dass** die Schneidplatte (12) einen Zapfen (78) aufweist, welcher von der Unterseite (38) des Grundkörpers (20) weiter absteht als die Erhöhungen (40) und symmetrisch zur Schneidplatten-Längsachse (18) ist, und dass die zumindest eine radiale Anlagefläche (48) als ununterbrochene, durchgehende zylindrische oder konische Fläche ausgestaltet ist, welche an einer von der Schneidplatten-Längsachse (18) abgewandten Außenseite des Zapfens (78) angeordnet ist.

2. Schneidplatte gemäß Anspruch 1, wobei eine auf die Schneidplatten-Längsachse (18) zuweisende Innenseite der Erhöhungen (40) an die Schneidplatten-Bohrung (22) angrenzt oder von dieser durch eine Fase, eine Senkung oder einen Freistich getrennt ist.

3. Schneidplatte gemäß Anspruch 1, wobei sich die Erhöhungen (40) vom Umfang des Zapfens (78) nach außen erstrecken.

4. Schneidplatte gemäß einem der vorstehenden Ansprüche, wobei die axialen Anlageflächen (52, 66) in einer gemeinsamen Ebene liegen, welche im Wesentlichen senkrecht zu der Schneidplatten-Längsachse (18) verläuft.

5. Schneidplatte gemäß einem der vorstehenden Ansprüche, wobei die Drehmomentmitnahmeflächen (56, 56') im Wesentlichen senkrecht zu den axialen Anlageflächen (52, 66) und im Wesentlichen parallel zu der Schneidplatten-Längsachse (18) verlaufen.

6. Schneidplatte gemäß einem der vorstehenden Ansprüche, wobei die Drehmomentmitnahmeflächen (56, 56') sinterrohe Flächen sind und die zumindest eine radiale Anlagefläche (48) und die axialen Anlageflächen (52, 66) geschliffene Flächen sind.

7. Schneidplatte gemäß einem der vorstehenden Ansprüche, wobei die Erhöhungen (40) eine erste Erhöhung (40) und eine zweite Erhöhung (40') aufweisen, wobei die erste Erhöhung (40) eine andere Form und/oder Größe hat als die zweite Erhöhung (40').

8. Schneidplatte gemäß einem der vorstehenden Ansprüche, wobei die Erhöhungen (40) in Umfangsrichtung voneinander getrennt und nicht miteinander verbunden sind.

9. Schneidplatte gemäß einem der vorstehenden Ansprüche, wobei die Schneidplatte (12) insgesamt drei, sechs oder neun der genannten Erhöhungen (40) aufweist.

10. Werkzeughalter (14) für ein Werkzeug (10) zur spanenden Bearbeitung eines Werkstücks, mit einem Schaft (26), welcher sich im Wesentlichen entlang einer Halter-Längsachse (28) erstreckt und an einem stirnseitigen Ende (30) eine Schnittstelle (32) zur Ankopplung einer Schneidplatte (12) aufweist, und mit einer im Schaft (26) vorgesehenen Halter-Bohrung (29), welche sich entlang der Halter-Längsachse (28) erstreckt, wobei die Schnittstelle (32) mehrere, in Umfangsrichtung verteilt angeordnete Vertiefungen (44) aufweist, welche durch relative Erhöhungen (46), die sich jeweils zwischen zwei benachbarten Vertiefungen (44) ergeben, voneinander getrennt sind, wobei der Halter (14) zumindest eine radiale Anlagefläche (50), mehrere axiale Anlageflächen (54, 68) und mehrere Drehmomentmitnahmeflächen (58, 58') zur Anlage der Schneidplatte (12) an dem Werkzeughalter (14) aufweist, wobei die zumindest eine radiale Anlagefläche (50) auf einem Zylindermantel oder einem Kegelmantel liegt, welcher symmetrisch zur Halter-Längsachse (28) ist, wobei die axialen Anlageflächen (54, 68) jeweils entweder an einer quer zur Halter-Längsachse (28) verlaufenden Grundfläche (64) der Vertiefungen (44) oder an einer quer zur Halter-Längsachse (28) verlaufenden Oberseite (68) der Erhöhungen (46) angeordnet sind, und die Drehmomentmitnahmeflächen (58, 58') jeweils an einer seitlichen Flanke der Vertiefungen (44) angeordnet sind, und wobei die zumindest eine radiale Anlagefläche (50), die axialen Anlageflächen (54, 68) und die Drehmomentmitnahmeflächen (58, 58') quer zueinander verlaufen,
**dadurch gekennzeichnet, dass** an der am stirnseitigen Ende (30) des Werkzeughalters (14) angeordneten Schnittstelle ein Zapfen (60) angeordnet ist, welcher von dem stirnseitigen Ende (30) des Werkzeughalters (14) weiter absteht als die Erhöhungen (46) und symmetrisch zur Halter-Längsachse (28) ist, und dass die zumindest eine radiale Anlagefläche (50) als ununterbrochene, durchgehende zylindrische oder konische Fläche ausgestaltet ist, welche an einer von der Halter-Längsachse (26) abgewandten Außenseite des Zapfens (60) angeordnet ist.

11. Werkzeug zur spanenden Bearbeitung eines Werkstücks, mit einer Schneidplatte (12) gemäß Anspruch 1, einem Werkzeughalter (14); und einem Befestigungselement (16) zum Befestigen der Schneidplatte (12) am Werkzeughalter (14), wobei der Werkzeughalter (14) einen Schaft (26) aufweist, welcher sich im Wesentlichen entlang einer Halter-Längsachse (28) erstreckt und an einem stirnseitigen Ende (30) eine Schnittstelle (32) zur Ankopplung einer Schneidplatte (12) aufweist, und wobei der Werkzeughalter (14) eine im Schaft (26) vorgesehenen Halter-Bohrung (29) aufweist, welche sich entlang der Halter-Längsachse (28) erstreckt, wobei die Schnittstelle (32) mehrere, in Umfangsrichtung verteilt angeordnete Vertiefungen (44) aufweist, welche durch relative Erhöhungen (46), die sich jeweils zwischen zwei benachbarten Vertiefungen (44) ergeben, voneinander getrennt sind, wobei der Werkzeughalter (14) zumindest eine radiale Anlagefläche (50), mehrere axiale Anlageflächen (54, 68) und mehrere Drehmomentmitnahmeflächen (58, 58') zur Anlage der Schneidplatte (12) an dem Werkzeughalter (14) aufweist, wobei die zumindest eine radiale Anlagefläche (50) auf einem Zylindermantel oder einem Kegelmantel liegt, welcher symmetrisch zur Halter-Längsachse (28) ist, wobei die axialen Anlageflächen (54, 68) jeweils entweder an einer quer zur Halter-Längsachse (28) verlaufenden Grundfläche (64) der Vertiefungen (44) oder an einer quer zur Halter-Längsachse (28) verlaufenden Oberseite (68) der Erhöhungen (46) angeordnet sind, und die Drehmomentmitnahmeflächen (58, 58') jeweils an einer seitlichen Flanke der Vertiefungen (44) angeordnet sind, und wobei die zumindest eine radiale Anlagefläche (50), die axialen Anlageflächen (54, 68) und die Drehmomentmitnahmeflächen (58, 58') quer zueinander verlaufen.

12. Werkzeug zur spanenden Bearbeitung eines Werkstücks, mit einer Schneidplatte (12), einem Werkzeughalter (14) gemäß Anspruch 10; und einem Befestigungselement (16) zum Befestigen der Schneidplatte (12) am Werkzeughalter (14), wobei die Schneidplatte (12) einen Grundkörper (20) hat, welcher eine Schneidplatten-Längsachse (18) definiert, und wobei die Schneidplatte (12) zumindest einen vom Umfang des Grundkörpers (20) seitlich auskragenden Schneidkörper (24) hat, welcher eine Schneide (25) aufweist, und wobei die Schneidplatte (12) eine im Grundkörper (20) vorgesehene Schneidplatten-Bohrung (22) aufweist, welche sich entlang der Schneidplatten-Längsachse (18) erstreckt, wobei auf einer quer zur Schneidplatten-Längsachse (18) verlaufenden Unterseite (38) des Grundkörpers (20) mehrere, in Umfangsrichtung verteilt angeordnete Erhöhungen (40) vorgesehen sind, welche von der Unterseite (38) des Grundkörpers (20) abstehen, so dass sich zwischen jeweils zwei benachbarten Erhöhungen (40) jeweils eine relative Vertiefung (42) ergibt, wobei die Schneidplatte (12) zumindest eine radiale Anlagefläche (48), mehrere axiale Anlageflächen (52, 66) und mehrere Drehmomentmitnahmeflächen (56, 56') zur Anlage der Schneidplatte (12) an einem Werkzeughalter (14) aufweist, wobei die zumindest eine radiale Anlagefläche (48) auf einem Zylindermantel oder einem Kegelmantel liegt, welcher symmetrisch zur Schneidplatten-Längsachse (18) ist, wobei die axialen Anlageflächen (52, 66) jeweils entweder an einer quer zur Schneidplatten-Längsachse (18) verlaufenden Oberseite (62) der Erhöhungen (40) oder an einer quer zur Schneidplatten-Längsachse (18) verlaufenden Grundfläche (66) der Vertiefungen (42) angeordnet sind, und die Drehmomentmitnahmeflächen (56, 56') jeweils an einer seitlichen Flanke der Erhöhungen (40) angeordnet sind, und wobei die zumindest eine radiale Anlagefläche (48), die axialen Anlageflächen (52, 66) und die Drehmomentmitnahmeflächen (56, 56') quer zueinander verlaufen.

13. Werkzeug gemäß Anspruch 11 oder 12, wobei in montiertem Zustand des Werkzeugs die zumindest eine radiale Anlagefläche (48) der Schneidplatte (12) an der zumindest einen radialen Anlagefläche (50) des Werkzeughalters (14), die axialen Anlageflächen (52, 66) der Schneidplatte (12) an den axialen Anlageflächen (54, 68) des Werkzeughalters (14), und die Drehmomentmitnahmeflächen (56, 56') der Schneidplatte (12) an den Drehmomentmitnahmeflächen (58, 58') des Werkzeughalters (14) anliegen.

## Claims

1. A cutting insert (12) for a tool (10) for machining a workpiece, comprising a base body (20), which defines a cutting insert longitudinal axis (18), at least one cutting body (24), which laterally projects from a periphery of the base body (20) and comprises a cutting edge (25), and a cutting insert bore (22), which is provided in the base body (20) and extends along the cutting insert longitudinal axis (18), wherein on an underside (38), running transversely to the cutting insert longitudinal axis (18), of the base body (20) are provided a plurality of elevations (40), which are arranged distributed in a peripheral direction and protrude from the underside (38) of the base body (20), so that between respectively two adjacent elevations (40) a relative depression (42) is respectively obtained, wherein the cutting insert (12) comprises at least one radial contact surface (48), a plurality of axial contact surfaces (52, 66) and a plurality of torque transfer surfaces (56, 56') for a bearing contact of the cutting insert (12) against a tool holder (14), wherein the at least one radial contact surface (48) lies on a cylindrical envelope or conical envelope symmetrical to the cutting insert longitudinal axis (18), wherein the axial contact surfaces (52, 66) are respectively arranged either on a top side (62), running transversely to the cutting insert longitudinal axis (18), of the elevations (40), or on a base surface (66), running transversely to the cutting insert longitudinal axis (18), of the depressions (42), and the torque transfer surfaces (56, 56') are arranged respectively on a lateral flank of the elevations (40), and wherein the at least one radial contact surface (48), the axial contact surfaces (52, 66) and the torque transfer surfaces (56, 56') run transversely to one another,
**characterized in that** the cutting insert (12) comprises a spigot (78), which protrudes further from the underside (38) of the base body (20) than the elevations (40) and is symmetrical to the cutting insert longitudinal axis (18), and **in that** the at least one radial contact surface (48) is an uninterrupted, continuous cylindrical or conical surface which is arranged on an outer side, facing away from the cutting insert longitudinal axis (18), of the spigot (78).

2. The cutting insert according to claim 1, wherein an inner side, facing toward the cutting insert longitudinal axis (18), of the elevations (40) adjoins the cutting insert bore (22) or is separated therefrom by a chamfer, a countersink or a recess.

3. The cutting insert according to claim 1, wherein the elevations (40) extend outward from a periphery of the spigot (78).

4. The cutting insert according to any of the preceding claims, wherein the axial contact surfaces (52, 66) lie in a common plane which is arranged perpendicular to the cutting insert longitudinal axis (18).

5. The cutting insert according to any of the preceding claims, wherein each of the torque transfer surfaces (56, 56') is arranged perpendicular to the axial contact surfaces (52, 66) and parallel to the cutting insert longitudinal axis (18).

6. The cutting insert according to any of the preceding claims, wherein the torque transfer surfaces (56, 56') are sintered and unpolished surfaces, and the at least one radial contact surface (48) and the axial contact surfaces (52, 66) are ground surfaces.

7. The cutting insert according to any of the preceding claims, wherein the elevations (40) comprise a first elevation (40) and a second elevation (40'), wherein the first elevation (40) has a different shape and size than the second elevation (40').

8. The cutting insert according to any of the preceding claims, wherein the elevations (40) are separated from one another in the peripheral direction and are not connected to one another.

9. The cutting insert according to any of the preceding claims, wherein the cutting insert (12) comprises three, six or nine of said elevations (40).

10. A tool holder (14) for a tool (10) for machining a workpiece, comprising a shank (26), which extends along a holder longitudinal axis (28) and comprises at a front-face end (30) an interface (32) for the connection of a cutting insert (12), and comprising a holder bore (29), which is provided in the shank (26) and extends along the holder longitudinal axis (28), wherein the interface (32) comprises a plurality of depressions (44), which are arranged distributed in a peripheral direction and are separated from one another by relative elevations (46) which are formed respectively between two adjacent depressions (44), wherein the holder (14) comprises at least one radial contact surface (50), a plurality of axial contact surfaces (54, 68) and a plurality of torque transfer surfaces (58, 58') for a bearing contact of the cutting insert (12) against the tool holder (14), wherein the at least one radial contact surface (50) lies on a cylindrical envelope or conical envelope which is symmetrical to the holder longitudinal axis (28), wherein the axial contact surfaces (54, 68) are arranged respectively either on a base surface (64), running transversely to the holder longitudinal axis (28), of the depressions (44), or on a top side (68), running transversely to the holder longitudinal axis (28), of the elevations (46), and the torque transfer surfaces (58, 58') are arranged respectively on a lateral flank of the depressions (44), and wherein the at least one radial contact surface (50), the axial contact surfaces (54, 68) and the torque transfer surfaces (58, 58') run transversely to one another,
**characterized in that** a spigot (60) is arranged on the interface that is arranged at the front-face end (30) of the tool holder (14), wherein the spigot (60) protrudes further from the front-face end (30) of the tool holder (14) than the elevations (46) and is symmetrical to the holder longitudinal axis (28), and **in that** the at least one radial contact surface (50) is an uninterrupted, continuous cylindrical or conical surface which is arranged on an outer side, facing away from the holder longitudinal axis (28), of the spigot (60).

11. A tool for machining a workpiece, comprising a cutting insert (12) according to claim 1, a tool holder (14), and a fastening element (16) for fastening the cutting insert (12) to the tool holder (14), wherein the tool holder (14) comprises a shank (26), which extends along a holder longitudinal axis (28) and comprises at a front-face end (30) an interface (32) for the connection of the cutting insert (12), and wherein the tool holder (14) comprises a holder bore (29), which is provided in the shank (26) and extends along the holder longitudinal axis (28), wherein the interface (32) comprises a plurality of depressions (44), which are arranged distributed in a peripheral direction and are separated from one another by relative elevations (46) which are formed respectively between two adjacent depressions (44), wherein the holder (14) comprises at least one radial contact surface (50), a plurality of axial contact surfaces (54, 68) and a plurality of torque transfer surfaces (58, 58') for a bearing contact of the cutting insert (12) against the tool holder (14), wherein the at least one radial contact surface (50) lies on a cylindrical envelope or conical envelope which is symmetrical to the holder longitudinal axis (28), wherein the axial contact surfaces (54, 68) are arranged respectively either on a base surface (64), running transversely to the holder longitudinal axis (28), of the depressions (44), or on a top side (68), running transversely to the holder longitudinal axis (28), of the elevations (46), and the torque transfer surfaces (58, 58') are arranged respectively on a lateral flank of the depressions (44), and wherein the at least one radial contact surface (50), the axial contact surfaces (54, 68) and the torque transfer surfaces (58, 58') run transversely to one another.

12. A tool for machining a workpiece, comprising a cutting insert (12), a tool holder (14) as according to claim 10, and a fastening element (16) for fastening the cutting insert (12) to the tool holder (14), wherein the cutting insert (12) comprises a base body (20), which defines a cutting insert longitudinal axis (18), at least one cutting body (24), which laterally projects from a periphery of the base body (20) and comprises a cutting edge (25), and a cutting insert bore (22), which is provided in the base body (20) and extends along the cutting insert longitudinal axis (18), wherein on an underside (38), running transversely to the cutting insert longitudinal axis (18), of the base body (20) are provided a plurality of elevations (40), which are arranged distributed in a peripheral direction and protrude from the underside (38) of the base body (20), so that between respectively two adjacent elevations (40) a relative depression (42) is respectively obtained, wherein the cutting insert (12) comprises at least one radial contact surface (48), a plurality of axial contact surfaces (52, 66) and a plurality of torque transfer surfaces (56, 56') for a bearing contact of the cutting insert (12) against the tool holder (14), wherein the at least one radial contact surface (48) lies on a cylindrical envelope or conical envelope symmetrical to the cutting insert longitudinal axis (18), wherein the axial contact surfaces (52, 66) are respectively arranged either on a top side (62), running transversely to the cutting insert longitudinal axis (18), of the elevations (40), or on a base surface (66), running transversely to the cutting insert longitudinal axis (18), of the depressions (42), and the torque transfer surfaces (56, 56') are arranged respectively on a lateral flank of the elevations (40), and wherein the at least one radial contact surface (48), the axial contact surfaces (52, 66) and the torque transfer surfaces (56, 56') run transversely to one another

13. The tool as claimed in claim 11 or 12, wherein, in the mounted state of the tool, the at least one radial contact surface (48) of the cutting insert (12) bears against the at least one radial contact surface (50) of the tool holder (14), the axial contact surfaces (52, 66) of the cutting insert (12) bear against the axial contact surfaces (54, 68) of the tool holder (14), and the torque transfer surfaces (56, 56') of the cutting insert (12) bear against the torque transfer surfaces (58, 58') of the tool holder (14).

## Revendications

1. Plaquette (12) pour un outil (10) pour l'usinage par enlèvement de copeaux d'une pièce, avec un corps de base (20), lequel définit un axe longitudinal de plaquette (18), avec au moins un corps de coupe (24) faisant saillie latéralement de la périphérie du corps de base (20), lequel comporte un tranchant (25), et avec un trou de plaquette (22) prévu dans le corps de base (20), lequel s'étend le long de l'axe longitudinal de plaquette (18), sachant que sur un côté inférieur (38) du corps de base (20) passant transversalement à l'axe longitudinal de plaquette (18) plusieurs élévations (40) disposées réparties en direction périphérique sont prévues, lesquelles dépassent de la face inférieure (38) du corps de base (20) de telle manière qu'il en résulte respectivement une cavité relative (42) entre respectivement deux élévations voisines (40), sachant que la plaquette (12) comporte au moins une surface d'appui radiale (48), plusieurs surfaces d'appui axiales (52, 66) et plusieurs surfaces d'entraînement de couple (56, 56') pour la mise en place de la plaquette (12) sur un porte-outil (14), sachant que l'au moins une surface d'appui radiale (48) se situe sur une enveloppe cylindrique ou une enveloppe conique, laquelle est symétrique à l'axe longitudinal de plaquette (18), sachant que les surfaces d'appui axiales (52, 66) sont respectivement disposées soit sur une face supérieure (62) des élévations (40) passant transversalement à l'axe longitudinal de plaquette (18), soit sur une surface de base (66) des cavités (42) passant transversalement à l'axe longitudinal de plaquette (18) et les surfaces d'entraînement de couple (56, 56') sont disposées respectivement sur un flanc latéral des élévations (40) et sachant que l'au moins une surface d'appui radiale (48), les surfaces d'appui axiales (52, 66) et les surfaces d'entraînement de couple (56, 56') passent transversalement les unes par rapport aux autres,
**caractérisée en ce que** la plaquette (12) comporte un tourillon (78), lequel dépasse davantage de la face inférieure (38) du corps de base (20) que les élévations (40) et est symétrique à l'axe longitudinal de plaquette (18) et **en ce que** l'au moins une surface d'appui radiale (48) est constituée sous la forme d'une surface ininterrompue, cylindrique continue ou conique, laquelle est disposée sur une face extérieure du tourillon (78) opposée à l'axe longitudinal de plaquette (18).

2. Plaquette selon la revendication 1, sachant qu'une face intérieure des élévations (40) tournée vers l'axe longitudinal de plaquette (18) est limitrophe au trou de plaquette (22) ou est séparée de celui-ci par un chanfrein, un lamage ou une rainure de dégagement.

3. Plaquette selon la revendication 1, sachant que les élévations (40) s'étendent de la périphérie du tourillon (78) vers l'extérieur.

4. Plaquette selon l'une quelconque des revendications précédentes, sachant que les surfaces d'appui axiales (52, 66) se situent dans un plan commun, lequel passe pour l'essentiel perpendiculairement à l'axe longitudinal de plaquette (18).

5. Plaquette selon l'une quelconque des revendications précédentes, sachant que les surfaces d'entraînement de couple (56, 56') passent pour l'essentiel perpendiculairement aux surfaces d'appui axiales (52, 66) et pour l'essentiel parallèlement à l'axe longitudinal de plaquette (18).

6. Plaquette selon l'une quelconque des revendications précédentes, sachant que les surfaces d'entraînement de couple (56, 56') sont des surfaces brutes de frittage et l'au moins une surface d'appui radiale (48) et les surfaces d'appui axiales (52, 66) sont des surfaces rectifiées.

7. Plaquette selon l'une quelconque des revendications précédentes, sachant que les élévations (40) comportent une première élévation (40) et une deuxième élévation (40'), sachant que la première élévation (40) possède une autre forme et/ou taille que la deuxième élévation (40').

8. Plaquette selon l'une quelconque des revendications précédentes, sachant que les élévations (40) sont séparées l'une de l'autre dans le sens périphérique et ne sont pas reliées entre elles.

9. Plaquette selon l'une quelconque des revendications précédentes, sachant que la plaquette (12) comporte au total trois, six ou neuf des élévations citées (40).

10. Porte-outil (14) pour un outil (10) pour l'usinage par enlèvement de copeaux d'une pièce, avec une queue (26), laquelle s'étend pour l'essentiel le long d'un axe longitudinal de support (28) et comporte à une extrémité frontale (30) une interface (32) pour l'accouplement d'une plaquette (12) et avec un trou de support, (29) prévu dans la queue (26), lequel s'étend le long de l'axe longitudinal de support (28), sachant que l'interface (32) comporte plusieurs cavités (44) disposées réparties dans le sens périphérique, lesquelles sont séparées les unes des autres par des élévations relatives (46) qui résultent respectivement entre deux cavités voisines (44), sachant que le support (14) comporte au moins une surface d'appui radiale (50), plusieurs surfaces d'appui axiales (54, 68) et plusieurs surfaces d'entraînement de couple (58, 58') pour mise en place de la plaquette (12) sur le porte-outil (14), sachant que l'au moins une surface d'appui radiale (50) se situe sur une enveloppe cylindrique ou une enveloppe conique, laquelle est symétrique à l'axe longitudinal de support (28), sachant que les surfaces d'appui axiales (54, 68) sont disposées respectivement soit sur une surface de base (64) des cavités (44) passant transversalement à l'axe longitudinal de support (28) soit sur une face supérieure (68) des élévations (46) passant transversalement à l'axe longitudinal de support (28) et les surfaces d'entraînement de couple (58, 58') sont disposées respectivement sur un flanc latéral des élévations (44) et sachant que l'au moins une surface d'appui radiale (50), les surfaces d'appui axiales (54, 68) et les surfaces d'entraînement de couple (58, 58') passent transversalement les unes par rapport aux autres,
**caractérisé en ce que** sur l'interface disposée à l'extrémité frontale (30) du porte-outil (14) est disposé un tourillon (60), lequel dépasse davantage de l'extrémité frontale (30) du porte-outil (14) que les élévations (46) et est symétrique à l'axe longitudinal de support (28) et **en ce que** l'au moins une surface d'appui radiale (50) est constituée sous la forme d'une surface ininterrompue, cylindrique continue ou conique, laquelle est disposée sur une face extérieure du tourillon (60) opposée à l'axe longitudinal de support (26).

11. Outil pour l'usinage par enlèvement de copeaux d'une pièce, avec une plaquette (12) selon la revendication 1, un porte-outil (14) et un élément de fixation (16) pour fixer la plaquette (12) sur le porte-outil (14), sachant que le porte-outil (14) comporte une queue (26), laquelle s'étend pour l'essentiel le long d'un axe longitudinal de support (28) et comporte à une extrémité frontale (30) une interface (32) pour l'accouplement d'une plaquette (12) et sachant que le porte-outil (14) comporte un trou de support (29) prévu dans la queue (26), lequel s'étend le long de l'axe longitudinal de support (28), sachant que l'interface (32) comporte plusieurs cavités (44) disposées réparties dans le sens périphérique, lesquelles sont séparées les unes des autres par des élévations relatives (46), qui résultent respectivement entre deux cavités voisines (44), sachant que le porte-outil (14) comporte au moins une surface d'appui radiale (50), plusieurs surfaces d'appui axiales (54, 68) et plusieurs surfaces d'entraînement de couple (58, 58') pour mise en place de la plaquette (12) sur le porte-outil (14), sachant que l'au moins une surface d'appui radiale (50) se situe sur une enveloppe cylindrique ou une enveloppe conique, laquelle est symétrique à l'axe longitudinal de support (28), sachant que les surfaces d'appui axiales (54, 68) sont respectivement disposées soit sur une surface de base (64) des cavités (44) passant transversalement à l'axe longitudinal de support (28), soit sur une face supérieure (68) des élévations (46) passant transversalement à l'axe longitudinal de support (28) et les surfaces d'entraînement de couple (58, 58') sont disposées respectivement sur un flanc latéral des cavités (44) et sachant que l'au moins une surface d'appui radiale (50), les surfaces d'appui axiales (54, 68) et les surfaces d'entraînement de couple (58, 58') passent transversalement les unes par rapport aux autres.

12. Outil pour l'usinage par enlèvement de copeaux d'une pièce, avec une plaquette (12), un porte-outil (14) selon la revendication 10, et un élément de fixation (16) pour fixer la plaquette (12) sur le porte-outil (14), sachant que la plaquette (12) possède un corps de base (20), lequel définit un axe longitudinal de plaquette (18), et sachant que la plaquette (12) possède au moins un corps de coupe (24) faisant saillie latéralement de la périphérie du corps de base (20), lequel comporte un tranchant (25) et sachant que la plaquette (12) comporte un trou de plaquette (22) prévu dans le corps de base (20), lequel s'étend le long de l'axe longitudinal de plaquette (18), sachant que sur une face inférieure (38) du corps de base (20) passant transversalement à l'axe longitudinal de plaquette (18) plusieurs élévations (40) disposées réparties dans le sens périphérique sont prévues, lesquelles dépassent de la face inférieure (38) du corps de base (20) de telle manière qu'il résulte respectivement une cavité relative (42) entre respectivement deux élévations voisines (40), sachant que la plaquette (12) comporte au moins une surface d'appui radiale (48), plusieurs surfaces d'appui axiales (52, 66) et plusieurs surfaces d'entraînement de couple (56, 56') pour mise en place de la plaquette (12) sur un porte-outil (14), sachant que l'au moins une surface d'appui radiale (48) se situe sur une enveloppe cylindrique ou une enveloppe conique, laquelle est symétrique à l'axe longitudinal de plaquette (18), sachant que les surfaces d'appui axiales (52, 66) sont disposées respectivement, soit sur une face supérieure (62) des élévations (40) passant transversalement à l'axe longitudinal de plaquette (18), soit sur une surface de base (66) des cavités (42) passant transversalement à l'axe longitudinal de plaquette (18) et les surfaces d'entraînement de couple (56, 56') sont disposées respectivement sur un flanc latéral des élévations (40) et sachant qu'au moins une surface d'appui radiale (48), les surfaces d'appui axiales (52, 66) et les surfaces d'entraînement de couple (56, 56') passent transversalement les une par rapport aux autres.

13. Porte-outil selon la revendication 11 ou 12, sachant qu'à l'état monté de l'outil l'au moins une surface d'appui radiale (48) de la plaquette (12) vient s'appliquer à l'au moins une surface d'appui radiale (50) du porte-outil (14), les surfaces d'appui axiales (52, 66) de la plaquette (12) viennent s'appliquer aux surfaces d'appui axiales (54, 68) du porte-outil (14) et les surfaces d'entraînement du couple (56, 56') de la plaquette (12) viennent s'appliquer aux surfaces d'entraînement du couple (58, 58') du porte-outil (14).
